# FASCICULE DE BREVET EUROPEEN

(11) **EP 1 160 048 B1**
(45) Date de publication et mention de la délivrance du brevet: **10.12.2003**
(21) Numéro de dépôt: 01401078.9
(22) Date de dépôt: 26.04.2001
(51) Int. Cl.: B23K 28/02, B23K 26/14

(54) **Procédé de soudage hybride laser-arc avec mélange gazeux approprié**
Hybrides Laser-Lichtbogenschweissverfahren mit geeigneter Gasmischung
Hybrid laser-arc welding process with an appropriate gas mixture

(30) Priorité: 31.05.2000 FR 0007013
(43) Date de publication de la demande: 05.12.2001
(60) Demande divisionnaire: 03291811.2
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Briand, Francis, 75009 Paris (FR); Bonnet, Christian, 95650 Puiseux-Pontoise (FR); Lefebvre, Philippe, 95310 Saint-Ouen L'Aumône (FR)
(74) Mandataire: Pittis, Olivier

(56) Documents cités:
- EP-A- 0 475 030
- EP-A- 0 826 456
- EP-A- 0 949 041
- DE-A- 2 436 833
- DE-A- 2 926 210
- DE-A- 19 649 887
- DE-A- 19 730 311
- DE-A- 19 848 954
- DE-A- 19 849 117
- GB-A- 2 295 569
- US-A- 3 939 323
- US-A- 4 507 540
- US-A- 5 006 688
- US-A- 5 210 388
- US-A- 5 488 216

## Description

La présente invention concerne un procédé et une installation hybrides de soudage combinant un faisceau laser et un arc électrique, en particulier un arc plasma, utilisant des mélanges gazeux particuliers en tant que gaz d'assistance du faisceau laser et/ou de l'arc électrique, et son application au soudage de tubes ou de flancs raboutés (tailored blanks).

Un procédé selon le préambule de la revendication 1 est connu du document US-A-4 507 540 ainsi que du document US-A-5 006 688.

La technologie du laser est connue et largement utilisée depuis des années pour souder des matériaux métalliques divers, telles des pièces en aciers alliés ou non, en aciers revêtus, en aciers inoxydables, en aluminium et alliages d'aluminium, ou encore des tubes en métaux divers.

D'une façon générale, une installation de soudage laser de soudage de tube comprend, outre les moyens d'amenée et de maintien du tube, un oscillateur laser solide ou à gaz produisant un faisceau monochromatique cohérent de haute énergie, un chemin optique équipé de miroirs de renvois ou bien une fibre optique permettant d'amener le faisceau laser vers une tête de soudage située en regard du tube à souder.

La tête de soudage comprend classiquement une lentille ou un ou plusieurs miroirs de focalisation de façon à focaliser le faisceau laser en un ou plusieurs points de focalisation dans l'épaisseur du matériau à souder et au niveau du plan de joint obtenu par réunion bord-à-bord soit des bords longitudinaux de la feuille métallique à souder en forme de tube (formage en "O") dans le cas de la fabrication d'un tube, soit des bords des pièces à assembler l'une à l'autre dans le cas du soudage de plusieurs pièces métalliques l'une avec l'autre, par exemple des flancs raboutés, de façon à concentrer localement suffisamment de densité de puissance pour fondre le matériau à souder.

Habituellement, la tête de soudage comprend un dispositif d'amené de gaz permettant l'alimentation en gaz de soudage, encore appelé gaz d'assistance, par l'intermédiaire d'une buse de distribution de gaz placée coaxialement au faisceau laser. Ce dispositif d'amené de gaz peut être aussi extérieur à la tête de soudage laser proprement dite.

Une solution alternative consiste à réaliser la fusion des bords à unir au niveau du plan de joint au moyen d'un ou plusieurs arcs électriques et en utilisant du gaz soit en tant que gaz de protection, soit en tant que gaz actif.

De tels procédés de soudage sont également couramment utilisés dans l'industrie ; selon le cas, il s'agit des procédés TIG (Tunsgten Inert Gas), MIG (Metal Inert Gas), MAG (Metal Active Gas) ou encore des procédés à l'arc plasma ou encore à l'arc submergé.

De tels procédés de soudage sont décrits notamment par les documents suivants : EP-A-847831, US-A-4,673,121, EP-A-136276, JP-A-58148096, JP-A-03198998, JP-A-03198997, EP-A-896853, US-A-5,192,016, US-A-4,738,714, EP-A-899052, JP-A-58107294, EP-A-234623, US-A-1,872,008, US-A-4,396,820, US-A-3,13,284, US-A-4,811,888 et US-A-3,931,489.

Toutefois, les procédés de soudage par laser ou les procédés de soudage à l'arc présentent chacun des inconvénients qui leurs sont propres et qui peuvent ou non varier selon que l'on soude un tube ou des flancs raboutés ou d'autres pièces métalliques.

Par exemple, dans le cas de la fabrication d'un tube, le processus de fabrication comporte, en général, une phase de formation d'un pré-tube à partir d'une bande métallique rectangulaire ou feuillard, suivie d'une phase de soudage du pré-tube en un tube soudé.

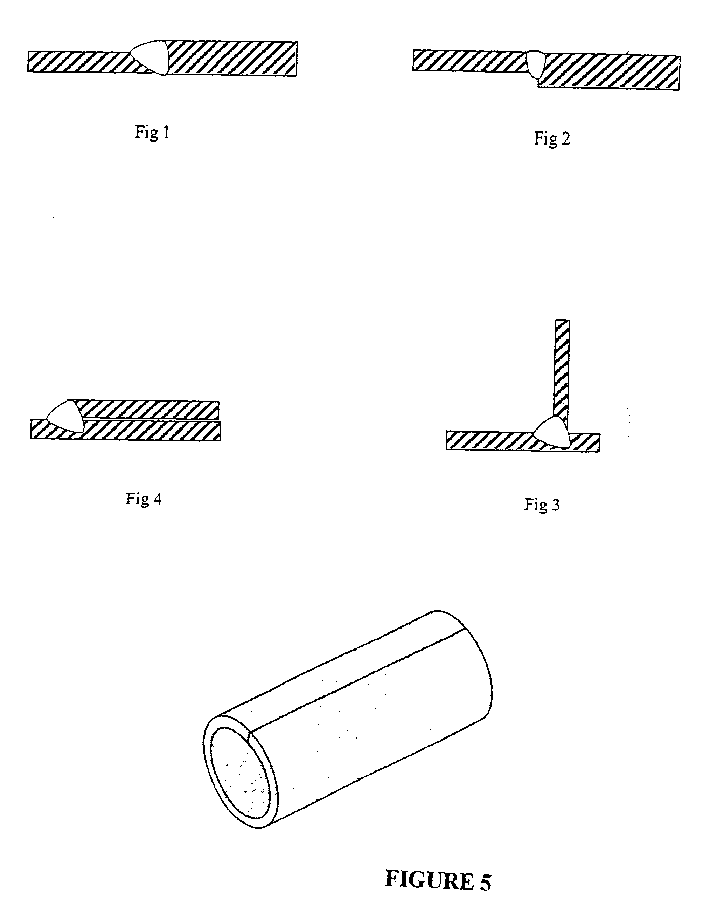

Selon une première technique, le soudage est réalisé axialement, c'est-à-dire que la bande métallique est successivement mise en forme de U puis de O par rapprochement de ses deux bords longitudinaux parallèles de manière à obtenir un pré-tube non soudé, et on opère ensuite un soudage longitudinal ou axial des deux bords à rabouter du pré-tube avec ou sans chanfrein pour obtenir un tube soudé axialement, comme schématisé sur la figure 5.

Selon une deuxième technique, le soudage peut être hélicoïdal ou en spirale. Dans ce cas, la bande métallique est d'abord soumise à une torsion selon un mouvement en spirale de manière à obtenir un rapprochement ou raboutage des deux bords longitudinaux de ladite bande selon un plan de joint ayant une forme de spirale ou d'hélice de manière à former, là encore, un pré-tube non soudé, ce pré-tube étant alors soumis à un soudage hélicoïdal de manière à assembler lesdits deux bords pour obtenir un tube soudé.

Bien entendu, dans tous les cas, le pré-tube et la tête de soudage sont animés d'un mouvement de déplacement relatif l'un par rapport à l'autre, c'est-à-dire soit le tube est fixe et la tête de soudage se déplace, soit l'inverse.

La phase de soudage peut se faire en une ou plusieurs passes et par mise en oeuvre d'un ou plusieurs procédés de soudage suivant le diamètre et l'épaisseur du pré-tube à souder.

Ces opérations sont effectuées à grande vitesse et il est important d'utiliser des procédés de soudage qui permettent d'avoir la pénétration désirée sans ralentir le processus de formage, c'est-à-dire aussi une vitesse minimale désirée permettant de conserver une productivité maximale ou, en tout cas, la plus élevée possible.

Dans les lignes de fabrication industrielles de tubes, on utilise très souvent le processus de soudage multi-cathodes qui met en oeuvre, en général, plusieurs arcs électriques TIG ou plasma alignés dans le plan de joint à souder.

Parfois, on utilise également le soudage par laser pour souder les tubes. En effet, par rapport au procédé multi-cathodes, l'utilisation d'un laser permet d'augmenter les vitesses mais au détriment d'une précision accrue qui impose alors un alignement beaucoup plus précis des bords à souder ainsi qu'un contrôle précis du jeu entre les bords à souder, ce qui est fort coûteux sur le plan des outillages à mettre en oeuvre.

Par analogie, dans le cas du soudage de flancs raboutés, tels ceux destinés à l'industrie automobile, il faut assembler entre elles deux tôles ou pièces, en général en acier, en acier galvanisé ou en aluminium, d'épaisseurs différentes et/ou de nuances différentes.

Suivant les méthodes et les préparations de soudage utilisées, le joint à souder se caractérise souvent par une différence de niveau entre les plans supérieurs de chacune des pièces à souder conduisant ainsi à la génération d'une "marche", comme montré sur la figure 1. Néanmoins, on peut également rencontrer la situation inverse, à savoir des joints de type flancs raboutés dont les plans supérieurs sont alignés mais dont les plans inférieurs ne sont pas de même niveau et où donc la « marche » est située à l'envers du joint à souder comme visible sur la figure 2. En outre, existe aussi le cas de pièces à souder ensemble qui sont de même épaisseur mais de nuances différentes l'une de l'autre.

On trouve fréquemment ce genre de soudures (Fig. 1 ou Fig. 2) dans l'industrie automobile où les pièces, une fois soudées, sont embouties pour leur donner leurs formes finales, par exemple, les différentes pièces qui entrent dans la fabrication d'une carrosserie de voiture et par exemple les portières, le toit, le capot ou le coffre. On peut aussi en trouver dans les éléments de structure de l'habitacle.

Afin d'améliorer les procédés connus de soudage de tubes ou de flancs raboutés, il a été proposé d'opérer un soudage des bords à unir l'un avec l'autre, par mise en oeuvre d'un procédé de soudage hybride combinant arc électrique et faisceau laser, en particulier arc plasma et faisceau laser.

Outre, les applications susmentionnées, un procédé de soudage hybride est également bien adapté au soudage de nombreux autres types de joints et peut, dès lors, être aussi utilisé pour, par exemple, le soudage d'angle schématisé sur la figure 3 et le soudage à clin montré sur la figure 4.

Divers procédés de soudage hybrides arc et laser ont été décrits notamment dans les documents EP-A-793558 ; EP-A-782489 ; EP-A-800434 ; US-A-5,006,688 ; US-A-5,700,989 ; EP-A-844042 ; *Laser GTA'Welding of aluminium alloy 5052,* TP Diebold et CE Albright, 1984, p. 18-24 ; SU-A-1815085, LJS-A-4,689,466 ; *Plasma arc augmented laser welding*, RP Walduck et J. Biffin, p.172-176, 1994; ou *TIG or MIG arc augmented laser welding of thick mild steel plate, Joining and Materials*, de J Matsuda et al., p. 31-34, 1988.

De façon générale, un procédé de soudage plasma-laser, ou plus généralement laser-arc, est un procédé de soudage hybride ou mixte qui associe le soudage à l'arc électrique à un faisceau laser.

Le procédé arc-laser consiste à générer un arc électrique entre une électrode, fusible ou non fusible, et la pièce à souder, et à focaliser un faisceau laser de puissance, notamment un laser de type YAG ou de type CO₂, dans la zone d'arc, c'est-à-dire au niveau ou dans le plan de joint obtenu par réunion bord-à-bord des parties du pré-tube à souder entre elles.

Un tel procédé hybride permet d'améliorer considérablement les vitesses de soudage par rapport au soudage laser seul ou au soudage à l'arc ou au plasma seul, et permet, en outre, d'accroître notablement les tolérances de positionnement des bords avant soudage ainsi que le jeu toléré entre les bords à souder, en particulier par rapport au soudage par faisceau laser seul qui exige une précision importante de positionnement des parties à souder à cause de la petite taille du point focal du faisceau laser.

La mise en oeuvre d'un procédé plasma-laser, et plus généralement d'un procédé arc-laser, requiert l'utilisation d'une tête de soudage qui permet de combiner dans un espace réduit le faisceau laser et son dispositif de focalisation, ainsi qu'une électrode de soudage adaptée.

Plusieurs configurations de têtes sont décrites dans les documents ci-dessus mentionnés et l'on peut dire, en résumé, que le faisceau laser et l'arc électrique ou le jet de plasma peuvent être délivrés par une seule et même tête de soudage, c'est-à-dire qu'ils sortent par le même orifice, ou alors par deux têtes de soudage distinctes, l'une délivrant le faisceau laser et l'autre l'arc électrique ou le jet de plasma, ceux-ci se réunissant dans la zone de soudage.

Les procédés hybrides arc-laser sont réputés parfaitement adaptés au soudage des flancs raboutés (ou tailored blanks) pour l'industrie automobile, car ils permettent d'obtenir un cordon de soudure bien mouillé et exempt de caniveaux, comme le rappelle les documents EP-A-782489 et *Laser plus arc equals power, Industrial Laser Solutions,* February 1999, p.28-30.

De façon générale, lors de la réalisation du joint de soudure, il est indispensable d'utiliser un gaz d'assistance pour assister le faisceau laser et protéger la zone de soudage des agressions extérieures et un gaz pour l'arc électrique, en particulier un gaz plasmagène servant à créer le jet de plasma d'arc, dans le cas d'un procédé arc-plasma.

Toutefois, il a été observé, en pratique, que les résultats, c'est-à-dire la qualité de la soudure obtenue, pouvaient varier considérablement en fonction des gaz utilisés en tant que gaz d'assistance du faisceau laser et gaz plasmagène.

De plus, en raison d'incompatibilités possibles entre le gaz et les pièces à souder par le procédé hybride, on ne peut pas utiliser n'importe quel gaz et n'importe comment, notamment il est habituellement recommandé de ne pas souder de l'aluminium avec un gaz contenant du CO₂ ou de l'O₂ dans la mesure où ces composés engendrent d'importantes diminution des propriétés mécaniques de la soudure obtenu, c'est-à-dire accroissent les risques de rupture de celle-ci.

De façon analogue, il est connu que l'oxygène et le dioxyde de carbone ne doivent pas être mis en contact directe avec l'électrode en tungstène servant à générer l'arc électrique pour ne pas la détériorer.

En outre, utiliser un gaz à base de CO₂ avec un laser de type CO₂ n'est pas souhaitable car le CO₂ risque d'absorber l'énergie du faisceau laser.

A l'inverse, la présence d'oxygène peut être bénéfique au soudage de certains matériaux tels les aciers. En effet, malgré la présence du plasma de soudage laser ou des vapeurs métalliques présentes dans la zone d'interaction qui vont naturellement être un lieu de fixation ou de confinement de l'arc électrique, il peut s'avérer nécessaire de stabiliser davantage l'arc électrique, notamment en injectant un peu d'oxygène dans la zone d'interaction, de manière à créer à la surface du bain des oxydes sur lesquels l'arc électrique viendra s'accrocher.

Partant de ces constatations, le but de l'invention est alors de proposer un procédé de soudage hybride amélioré permettant de souder efficacement des pièces en différents matériaux et utilisant différents gaz ou mélanges gazeux mis en oeuvre de manière judicieuse pour éviter les problèmes d'incompatibilité susmentionné et pouvoir ainsi obtenir des soudures de qualité.

L'invention concerne alors un procédé de soudage hybride laser/arc électrique avec électrode, d'une ou plusieurs pièces métalliques à assembler par réalisation d'au moins un joint de soudure entre les bords à souder portés par la ou lesdites pièces métalliques, ledit joint de soudure étant obtenu par mise en oeuvre d'au moins un faisceau laser et d'au moins un arc électrique, dans lequel, pendant le soudage du joint, on protège au moins une partie de la zone de soudage comprenant au moins une partie dudit joint de soudure en cours de réalisation avec au moins une atmosphère protectrice, caractérisé en ce que l'atmosphère protectrice est formée par un mélange gazeux constitué :
- d'au moins 70% en volume d'argon et d'hélium, et
- de CO₂ ou de O₂, la teneur en CO₂ ou en O₂ allant jusqu'à 30% en volume.

Selon le cas, le procédé de soudage de l'invention peut comprendre l'une ou plusieurs des caractéristiques suivantes :
- l'atmosphère protectrice est formée par un mélange gazeux constitué de 0,1% à 69,9% en volume d'hélium, de 0,1% à 69,9% en volume d'argon et de 0,1 à 30 % en volume d'un composé additionnel choisi parmi O₂ et CO₂, la somme des teneurs en argon et en hélium étant au moins 70% du volume total du mélange.
- l'atmosphère protectrice est formée par un mélange gazeux constitué d'au moins 70% en volume d'hélium et d'argon et de 0.1 à 30% en volume d'un composé additionnel choisi parmi O₂ et CO₂ et la ou les pièces à souder sont en acier, notamment en acier au carbone.
- la teneur en CO₂ ou en O₂ est non nulle et inférieure ou égale à 20% en volume, de préférence non nulle et inférieure ou égale à 15% en volume.
- la ou les pièces à souder sont en un métal ou un alliage métallique choisi parmi les aciers revêtus ou non-revêtus, en particulier les aciers d'assemblage, les aciers à hautes limites élastiques (HLES), les aciers au carbone, les aciers comportant en surface une couche d'alliage de zinc, et les aciers inoxydables.
- la ou les pièces à souder sont en acier au carbone ou en acier inoxydable.
- l'électrode est fusible ou non-fusible.
- le faisceau laser est émis par un laser de type Nd:YAG ou CO₂.
- l'atmosphère protectrice est formée par un mélange gazeux constitué d'argon, d'hélium et de CO₂, la teneur en CO₂ allant jusqu'à 2% en volume.
- l'atmosphère protectrice est formée par un mélange gazeux constitué d'argon, d'hélium et de O₂, la teneur en O₂ allant jusqu'à 5% en volume.
- l'arc électrique est un arc-plasma.
- l'arc électrique est délivrée par une torche à arc-plasma, le faisceau laser et ledit arc étant délivrés par une tête de soudage unique.

L'invention concerne aussi l'utilisation du procédé de soudage ci-avant pour souder au moins un flanc rabouté destiné à constituer au moins une partie d'un élément de carrosserie de véhicule.

L'invention concerne, par ailleurs, l'utilisation du procédé de soudage ci-avant pour assembler par soudage des pièces métalliques ayant des épaisseurs différentes, en particulier des flancs raboutés.

Selon un autre aspect, l'invention porte aussi sur l'utilisation du procédé de soudage ci-avant pour assembler par soudage des pièces métalliques ayant des épaisseurs égales ou différentes et ayant des compositions métallurgiques ou des nuances métallurgiques différentes, en particulier des flancs raboutés.

Selon encore un autre aspect, l'invention porte aussi sur l'utilisation du procédé de soudage ci-avant pour assembler par soudage les deux bords longitudinaux d'un tube.

Compte tenu des géométries possibles de têtes de soudage, des procédés hybrides selon l'invention et des différents moyens d'amener les gaz ou les mélanges gazeux, les mélanges gazeux selon l'invention et dont il sera question ci-après sont ceux que l'on obtient dans la zone d'interaction entre la ou les tôles. à souder et le laser et l'arc, indépendamment de la manière dont on a pu les créer.

Dans les exemples ci-après sont donnés plusieurs types de mélanges gazeux pouvant être utilisés pour souder différents matériaux. Les mélanges constitués de Ar + He + CO₂ et/ou O₂ sont selon l'invention. Les autres mélanges sont donnés comme examples comparatifs et ne sont pas couverts par les revendications.

### Exemples

| Soudage hybride laser/arc électrique avec électrode non fusible | | |
|---|---|---|
| Mélange gazeux | Teneurs (% en vol.) | Matériau soudé |
| Ar + He + H₂ | H₂ : < 10 | Aciers inoxydables |
| | Ar + He : le reste | |
| Ar + H₂ | H₂ : < 10 | Aciers inoxydables |
| | Ar : le reste | |
| He + H₂ | H₂ : < 10 | Aciers inoxydables |
| | He : le reste | |
| Ar + He + CO₂ | CO₂ : < 2 | Aciers inoxydables |
| | Ar + He : le reste | |
| Ar + CO₂ | CO₂ : < 2 | Aluminium |
| | Ar : le reste | |
| Ar + O₂ | O₂ : < 2 | Aluminium |
| | Ar : le reste | |
| He + CO₂ | CO₂ : < 2 | Aluminium |
| | He : le reste | |
| Ar + N₂ | N₂ : < 20 | Aciers (tout type) |
| | Ar : le reste | |
| He + N₂ | N₂ : <20 | Aciers (tout type) |
| | He : le reste | |
| Ar + He + N₂ | N₂ : < 20 | Aciers (tout type) |
| | He + Ar : le reste | |
| Ar + He + CO₂ | CO₂ : < 15 | Aciers carbone |
| | Ar + He : le reste | |
| Ar + He + O₂ | O₂ : < 5 | Aciers carbone |
| | Ar + He : le reste | |
| Ar + CO₂ | CO₂ : < 15 | Aciers carbone |
| | Ar : le reste | |
| Ar + O₂ | O₂ : < 7 | Aciers carbone |
| | Ar : le reste | |
| He + CO₂ | CO₂ : < 15 | Aciers carbone |
| | He : le reste | |
| He + O₂ | O₂ : < 7 | Aciers carbone |
| | He : le reste | |
| Ar + CO₂ + O₂ | O₂ : < 5 | Aciers carbone |
| | CO₂ : < 10 | |
| | Ar : le reste | |
| He + CO₂ + O₂ | O₂ : < 5 | Aciers carbone |
| | CO₂ : < 10 | |
| | He : le reste | |
| Ar + He + CO₂ + H₂ | H₂ : < 2 | Aciers inoxydables |
| | CO₂ : < 2 | |
| | Ar : le reste | |
| Ar + CO₂ | CO₂ : < 2 | Aluminium |
| | Ar : le reste | Aciers inoxydables |
| Ar + O₂ | O₂ : < 2 | Aluminium |
| | Ar : le reste | Aciers inoxydables |
| He + CO₂ | CO₂ : < 2 | Aluminium |
| | He : le reste | Aciers inoxydables |
| He + O₂ | O₂ : < 2 | Aluminium |
| | He : le reste | Aciers inoxydables |

## Revendications

1. Procédé de soudage hybride laser/arc électrique avec électrode, d'une ou plusieurs pièces métalliques à assembler par réalisation d'au moins un joint de soudure entre les bords à souder portés par la ou lesdites pièces métalliques, ledit joint de soudure étant obtenu par mise en oeuvre d'au moins un faisceau laser et d'au moins un arc électrique, dans lequel, pendant le soudage du joint, on protège au moins une partie de la zone de soudage comprenant au moins une partie dudit joint de soudure en cours de réalisation avec au moins une atmosphère protectrice, **caractérisé en ce que** l'atmosphère protectrice est formée par un mélange gazeux constitué :
- d'au moins 70% en volume d'argon et d'hélium, et
- de CO₂ ou de O₂, la teneur en CO₂ ou en O₂ étant non nulle et allant jusqu'à 30% en volume.

2. Procédé de soudage selon la revendication 1, **caractérisé en ce que** la teneur en CO₂ ou en O₂ est non nulle et inférieure ou égale à 20% en volume, de préférence non nulle et inférieure ou égale à 15% en volume.

3. Procédé de soudage selon la revendication 1, **caractérisé en ce que** la ou les pièces à souder sont en un métal ou un alliage métallique choisi parmi les aciers revêtus ou non-revétus, en particulier les aciers d'assemblage, les aciers à hautes limites élastiques (HLES), les aciers au carbone, les aciers comportant en surface une couche d'alliage de zinc, et les aciers inoxydables.

4. Procédé de soudage selon la revendication 1, **caractérisé en ce que** la ou les pièces à souder sont en acier au carbone ou en acier inoxydable.

5. Procédé de soudage selon l'une des revendications 1 à 4, **caractérisé en ce que** l'électrode est fusible ou non-fusible.

6. Procédé de soudage selon l'une des revendications 1 à 5, **caractérisé en ce que** le faisceau laser est émis par un laser de type Nd:YAG ou CO₂.

7. Procédé de soudage selon l'une des revendications 1 à 6, **caractérisé en ce que** l'atmosphère protectrice est formée par un mélange gazeux constitué d'argon, d'hélium et de CO₂, la teneur en CO₂ allant jusqu'à 2% en volume.

8. Procédé de soudage selon l'une des revendications 1 à 6, **caractérisé en ce que** l'atmosphère protectrice est formée par un mélange gazeux constitué d'argon, d'hélium et de O₂, la teneur en O₂ allant jusqu'à 5% en volume.

9. Procédé de soudage selon la revendication 1, **caractérisé en ce que** l'arc électrique est un arc-plasma.

10. Procédé de soudage selon l'une des revendications 1 à 9, **caractérisé en ce que** l'arc électrique est délivrée par une torche à arc-plasma, le faisceau laser et ledit arc étant délivrés par une tête de soudage unique.

11. Utilisation d'un procédé de soudage selon l'une des revendications 1 à 10 pour souder au moins un flanc rabouté destiné à constituer au moins une partie d'un élément de carrosserie de véhicule.

12. Utilisation d'un procédé de soudage selon l'une des revendications 1 à 10 pour assembler par soudage des pièces métalliques ayant des épaisseurs différentes, en particulier des flancs raboutés.

13. Utilisation d'un procédé de soudage selon l'une des revendications 1 à 10 pour assembler par soudage des pièces métalliques ayant des épaisseurs égales ou différentes et ayant des compositions métallurgiques ou des nuances métallurgiques différentes, en particulier des flancs raboutés.

14. Utilisation d'un procédé de soudage selon l'une des revendications 1 à 10 pour assembler par soudage les deux bords longitudinaux d'un tube.

## Claims

1. Process for the laser/electrode arc welding of one or more metal workpieces to be joined together by producing at least one welded joint between the edges to be welded of the the said metal workpiece or workpieces, the the said welded joint being obtained by using at least one laser beam and at least one electric arc, in which process, during welding of the joint, at least one part of the welding zone comprising at least one part of the said welded joint is shielded during the operation with at least one shielding atmosphere, **characterized in that** the shielding atmosphere is formed by a gas mixture consisting of:
- at least 70% by volume of argon and helium; and
- CO₂ or O₂, the CO₂ or O₂ content being non zero and ranging up to 30% by volume.

2. Welding process according to Claim 1, **characterized in that** the CO₂ or O₂ content is non zero and less than or equal to 20% by volume, preferably non zero and less than or equal to 15% by volume.

3. Welding process according to Claim 1, **characterized in that** the workpiece or workpieces to be welded are made of a metal or a metal alloy chosen from coated or uncoated steels, particularly assembly steels, high yield point steels (HYS), carbon steels, steels having a layer of zinc alloy on the surface, and stainless steels.

4. Welding process according to Claim 1, **characterized in that** the workpiece or workpieces to be welded are made of carbon steel or stainless steel.

5. Welding process according to one of Claims 1 to 4, **characterized in that** the electrode is consumable or not consumable.

6. Welding process according to one of Claims 1 to 5, **characterized in that** the laser beam is emitted by an Nd:YAG or CO₂ laser.

7. Welding process according to one of Claims 1 to 6, **characterized in that** the shielding atmosphere is formed by a gas mixture consisting of argon, helium and CO₂, the CO₂ content ranging up to 2% by volume.

8. Welding process according to one of Claims 1 to 6, **characterized in that** the shielding atmosphere is formed by a gas mixture consisting of argon, helium and CO₂, the CO₂ content ranging up to 5% by volume.

9. Welding process according to Claim 1, **characterized in that** the electronic arc is a plasma arc.

10. Welding process according to one of Claims 1 to 9, **characterized in that** the electric arc is delivered by a plasma-arc torch, laser beam and the said arc being delivered by a single welding head.

11. Use of a welding process according to one of Claims 1 to 10 for welding at least one tailored blank intended to constitute at least one part of a vehicle body element.

12. Use of a welding process according to one of Claims 1 to 10 for joining together, by welding, metal workpieces having different thicknesses, particularly tailored blanks.

13. Use of a welding process according to one of Claims 1 to 10 for joining together, by welding, metal workpieces having the same or different thicknesses and having different metallurgical compositions or metallurgical grades, particularly tailored blanks.

14. Use of a welding process according to one of Claims 1 to 10 for joining together, by welding, the two longitudinal edges of a pretube.

## Patentansprüche

1. Laser/Lichtbogen-Hybridschweißverfahren mit Elektrode, für ein oder mehrere Metallteile, die durch mindestens eine Schweißverbindung zwischen den zu schweißenden Kanten, die von dem Metallteil oder von den Metallteilen getragen werden, zusammenzufügen sind, wobei diese Schweißverbindung durch mindestens einen Laserstrahl und mindestens einen Lichtbogen erhalten wird, in welchem während des Schweißens der Verbindung mindestens ein Abschnitt der Schweißzone, der mindestens einen Abschnitt dieser in der Herstellung begriffenen Schweißverbindung enthält, mit mindestens einer Schutzgasatmosphäre geschützt wird, **dadurch gekennzeichnet, daß** die Schutzgasatmosphäre durch ein Gasgemisch gebildet wird, bestehend aus:
- mindestens 70 Volumen-% Argon und Helium, und
- CO₂ oder O₂, wobei der CO₂- oder 02-Gehalt ungleich null ist und bis zu 30 Volumen-% beträgt.

2. Schweißverfahren nach Anspruch 1, **dadurch gekennzeichnet, daß** der CO₂- oder O₂-Gehalt ungleich null und kleiner oder gleich 20 Volumen-% ist, bevorzugt ungleich null und kleiner oder gleich 15 Volumen-%.

3. Schweißverfahren nach Anspruch 1, **dadurch gekennzeichnet, daß** das oder die zu schweißenden Teile aus einem Metall oder aus einer Metallegierung sind, die aus den beschichteten oder unbeschichteten Stahlen gewählt werden insbesondere Montagestahle, Stahle mit hoher Streckgrenze, Carbonstahle, Stahle, deren Oberfläche mit einer Schicht aus Zinklegierung versehen ist, und nichtrostende Stahle.

4. Schweißverfahren nach Anspruch 1, **dadurch gekennzeichnet, daß** das oder die zu schweißenden Teile aus Carbonstahl oder aus nichtrostendem Stahl sind.

5. Schweißverfahren nach einem der Ansprüche 1 bis 4, **dadurch gekennzeichnet, daß** die Elektrode schmelzend oder nicht schmelzend ist.

6. Schweißverfahren nach einem der Ansprüche 1 bis 5, **dadurch gekennzeichnet, daß** der Laserstrahl von einem Laser des Typs Nd:YAG oder CO₂ abgegeben wird.

7. Schweißverfahren nach einem der Ansprüche 1 bis 6, **dadurch gekennzeichnet, daß** die Schutzgasatmosphäre durch ein Gasgemisch gebildet wird, das aus Argon, Helium und CO₂ besteht, wobei der CO₂-Gehalt bis zu 2 Volumen-% beträgt.

8. Schweißverfahren nach einem der Ansprüche 1 bis 6, **dadurch gekennzeichnet, daß** die Schutzgasatmosphäre durch ein Gasgemisch gebildet wird, das aus Argon, Helium und O₂ besteht, wobei der O₂-Gehalt bis zu 5 Volumen-% beträgt.

9. Schweißverfahren nach Anspruch 1, **dadurch gekennzeichnet, daß** der Lichtbogen ein Plasmabogen ist.

10. Schweißverfahren nach einem der Ansprüche 1 bis 9, **dadurch gekennzeichnet, daß** der Lichtbogen von einem Plasmabogenbrenner abgegeben wird, wobei der Laserstrahl und dieser Bogen von einem einzigen Schweißkopf abgegeben werden.

11. Verwendung eines Schweißverfahrens nach einem der Ansprüche 1 bis 10, um mindestens ein maßgeschneidertes Blech zu schweißen, das dazu bestimmt ist, mindestens einen Teil eines Karosserieelements eines Fahrzeugs zu bilden.

12. Verwendung eines Schweißverfahrens nach einem der Ansprüche 1 bis 10, um durch Schweißung Metallteile mit verschiedenen Dicken miteinander zu verbinden, insbesondere maßgeschneiderte Bleche.

13. Verwendung eines Schweißverfahrens nach einem der Ansprüche 1 bis 10, um durch Schweißung Metallteile miteinander zu verbinden, die gleiche oder verschiedene Dicken aufweisen, und die verschiedene metallurgische Zusammensetzungen oder metallurgische Sorten aufweisen, insbesondere maßgeschneiderte Bleche.

14. Verwendung eines Schweißverfahrens nach einem der Ansprüche 1 bis 10, um die zwei Längskanten eines Rohrs durch Schweißung miteinander zu verbinden.
